# EUROPÄISCHE PATENTSCHRIFT

(11) **EP 2 501 496 B1**
(45) Veröffentlichungstag und Bekanntmachung des Hinweises auf die Patenterteilung: **12.02.2014**
(21) Anmeldenummer: 10773851.0
(22) Anmeldetag: 16.10.2010
(51) Int. Cl.: B05D 7/00, C08G 18/62, C08G 18/80, C09D 175/04, B05D 7/14, C08G 18/79

(54) **BESCHICHTUNGSMITTEL MIT GUTER LAGERBESTÄNDIGKEIT UND DARAUS HERGESTELLTE BESCHICHTUNGEN MIT HOHER KRATZFESTIGKEIT BEI GLEICHZEITIG GUTER WITTERUNGSBESTÄNDIGKEIT**
COATING AGENTS WITH GOOD STORAGE STABILITY, AND COATINGS PRODUCED THEREFROM WITH HIGH SCRATCH RESISTANCE AND SIMULTANEOUSLY GOOD WEATHERING RESISTANCE
AGENT DE REVÊTEMENT À BONNE RÉSISTANCE AU STOCKAGE, ET REVÊTEMENTS AINSI OBTENUS À HAUTE RÉSISTANCE AUX RAYURES AINSI QU'À BONNE RÉSISTANCE AUX INTEMPÉRIES

(30) Priorität: 20.11.2009 DE 102009054071
(43) Veröffentlichungstag der Anmeldung: 26.09.2012
(73) Patentinhaber: BASF Coatings GmbH, 48165 Münster (DE)
(72) Erfinder: ARENS, Christian, 48167 Muenster (DE); GROENEWOLT, Matthijs, 48147 Muenster (DE)
(86) Internationale Anmeldenummer: PCT/EP2010/006330
(87) Internationale Veröffentlichungsnummer: WO 2011/060858

(56) Entgegenhaltungen:
- EP-A1- 1 211 273
- EP-A2- 1 273 640
- WO-A1-2008/074489
- US-A1- 2005 209 433

## Beschreibung

Die vorliegende Erfindung betrifft thermisch härtbare Beschichtungsmittel auf Basis aprotischer Lösemittel enthaltend (A) mindestens ein hydroxylgruppenhaltiges Polyacrylat und/oder Polymethacrylat und/oder Polyurethan und/oder Polyester und/oder Polysiloxan und mindestens eine Verbindung (B) mit blockierten Isocyanatgruppen und mit Alkoxysilangruppen.

Aus der EP-A-1 211 273 sind 1 K Beschichtungsmittel bekannt, die neben hydroxylgruppenhaltigen Bindemitteln als Vernetzer das Umsetzungsprodukt von aliphatischen und/oder cycloaliphatischen Polyisocyanaten mit mindestens einem sekundären 3-Aminopropyltrialkoxysilan und mindestens einem Blockierungsmittel enthalten. Als Silanverbindung werden dabei bevorzugt N-Alkyl-3-Aminopropyltrialkoxysilane, insbesondere N-Butyl-3-Aminopropyltrimethoxysilan, eingesetzt. Diese Beschichtungs-mittel zeichnen sich durch eine im Vergleich zu herkömmlichen 1 K-Beschichtungsmitteln auf Basis nicht-silanisierter, blockierter Isocyanate geringere Kristallisationsneigung der blockierten Isocyanate sowie eine verbesserte Kratzfestigkeit der resultierenden Beschichtungen aus. Nachteilig ist jedoch vor allem die nur unzureichende Lagerstabilität der Beschichtungsmittel.

Außerdem sind aus der WO08/110229 und der WO08/110230 1 K und 2K Beschichtungsmittel bekannt, die neben hydroxylgruppenhaltigen Bindemitteln und Aminoplastharzen und/oder Isocyanaten als Vernetzer das Umsetzungsprodukt von Isocyanaten mit oberflächenaktiven Verbindungen und Aminoalkyltrialkoxysilanen enthalten. Die silangruppenhaltigen Umsetzungsprodukte reichern sich an der Oberfläche der resultierenden Beschichtungen an und führen dort zu einer im Vergleich zum Bulk erhöhten Vernetzungsdichte. Dadurch zeichnen sich die so erhaltenen Beschichtungen durch eine verbesserte Kratzfestigkeit und Mikroeindringhärte bei gleichzeitig sehr guter Witterungsstabilität und Rissbeständigkeit aus. Verbesserungsbedürftig ist die Lagerstabilität der 1 K Beschichtungsmittel.

Weiterhin sind aus der WO05/092934 1 K Beschichtungsmittel insbesondere für die Autoreparaturlackierung bekannt, die als Bindemittel mit Orthoestern blockierte hydroxylgruppenhaltige Poly(meth)acrylate und als Vernetzer Di- und/oder Polyisocyanate mit freien Isocyanatgruppen enthalten. Die Beschichtungsmittel zeichnen sich durch einen reduzierten Gehalt an organischen Lösemitteln aus. Verbesserungsbedürftig ist die Kratzfestigkeit der resultierenden Beschichtungen ebenso wie die Lagerstabilität der Beschichtungsmittel.

Ferner sind aus der EP-B-1 225 172 Beschichtungsmittel bekannt, die Polyorthoester (A), Vernetzungsmittel (B) mit gegenüber Hydroxylgruppen reaktiven Gruppen, wie blockierte oder unblöckierte Isocyanate, Aminoplastharze, Epoxidharze, Anhydride oder Alkoxysilangruppen enthaltende Komponenten, und ggf. hydroxylgruppenhaltige Verbindungen (C) enthalten. Die Polyorthoester (A) sind dabei Umsetzungsprodukte von (a) mindestens einem monomeren α-Glykol und/oder β-Glykol, (b) hydroxylgruppenhaltigen, von den Glykolen (a) verschiedenen oligomeren und/-oder polymeren Verbindungen, wie hydroxylgruppenhaltigen Poly(meth)-acrylaten, mit (c) Orthoestern von C1 bis C4-Carbonsäuren, wie insbesondere Orthoformiaten und Orthoacetaten. Durch die Verwendung von α-Glykol und/oder β-Glykol bei der Herstellung der Polyorthoester soll die Gelierung der Polyorthoester vermieden und die Viskosität der resultierenden Polyorthoester erniedrigt werden. Angaben, wie die Lagerstabilität der resultierenden Beschichtungsmittel verbessert werden kann und dennoch eine gute Aushärtung der Beschichtungsmittel gewährleistet ist, fehlen hier jedoch ebenso wie Angaben zur Verbesserung der Kratzfestigkeit der resultierenden Beschichtung. Außerdem ist die Herstellung der dort verwendeten Polyorthoester recht aufwändig.

Schließlich sind aus der US-A-6,297,329 Beschichtungsmittel bekannt, die mit bicyclischen Orthoestern oder mit Spiro-Orthoestern blockierte hydroxylgruppenhaltige monomere oder polymere Verbindungen, ggf. unblockierte hydroxylgruppenhaltige Verbindungen und Vernetzungsmittel mit gegenüber Hydroxylgruppen reaktiven Gruppen enthalten. Durch die Blockierung mit den speziellen Orthoestern wird die Viskosität der Bindemittel im Vergleich zur Viskosität der nicht blockierten Bindemittel erniedrigt, wodurch die Bereitstellung von Beschichtungsmitteln mit geringerem Lösemittelgehalt ermöglicht werden soll. Zusätzlich wird das Ablaufverhalten der Beschichtungen verbessert, weil die Viskosität der Beschichtungsmittel nach Applikation dadurch erhöht wird, dass durch den Kontakt mit Luftfeuchtigkeit die Orthoester abgespalten und so die höher viskosen hydroxylgruppenhaltigen Bindemittel wieder freigesetzt werden.

Als Beispiel für geeignete, gegenüber Hydroxylgruppen reaktive Gruppen der Vernetzungsmittel werden in der US-A-6, 297, 329 blockierte oder unblockierte Isocyanatgruppen, Acetalgruppen, Epoxidgruppen, Carboxylgruppen, Anhydridgruppen und/oder Alkoxysilangruppen genannt. Alternativ können als Vernetzungsmittel auch Aminoplastharze eingesetzt werden. Angaben, wie durch die Auswahl der Vernetzungsmittel die Eigenschaften der resultierenden Beschichtungen, wie beispielsweise die Kratzfestigkeit, Witterungsbeständigkeit und die Säurebeständigkeit gesteuert werden können, sind jedoch nicht in der Schrift enthalten. Verbesserungsbedürftig ist außerdem auch hier wiederum die Lagerstabilität der Beschichtungsmittel.

### Aufgabe

Aufgabe der vorliegenden Erfindung war es, Beschichtungsmittel, insbesondere für die Klarlackschicht bei Automobilserienlackierungen und der Lackierung von Automobil-Anbauteilen zur Verfügung zu stellen, die eine sehr gute Lagerstabilität aufweisen, d.h. dass die Viskosität bei Lagerung bei Temperaturen von 40°C innerhalb von 28 Tagen nicht mehr als um 50% ansteigen darf. Gleichzeitig sollten die Beschichtungsmittel auch eine sehr gute Aushärtung unter den im Bereich der Automobillackierung üblichen Härtebedingungen, insbesondere bei Temperaturen von 100 bis 200°C während einer Zeit von 10 min bis zu 1 h gewährleisten.

Außerdem sollten die Beschichtungsmittel zu hochglänzenden Beschichtungen führen, die hochgradig kratzfest sind und insbesondere einen hohen Glanzerhalt nach Kratzbelastung aufweisen. Ferner sollten die resultierenden Beschichtungen und Lackierungen, insbesondere die Klarlackierungen, auch für das technologisch und ästhetisch besonders anspruchsvolle Gebiet der Automobilserienlackierung (OEM) einsetzbar sein. So sollten die Beschichtungen auch eine gute Säurebeständigkeit und eine geringe Vergilbung beim Einbrennen aufweisen. Darüber hinaus sollen die neuen Beschichtungsmittel einfach und sehr gut reproduzierbar herstellbar sein und während der Lackapplikation keine ökologischen Probleme bereiten.

### Lösung der Aufgabe

Im Lichte der oben genannten Aufgabenstellung wurden Beschichtungsmittel auf Basis aprotischer Lösemittel gefunden, enthaltend
(A) mindestens ein hydroxylgruppenhaltiges Polyacrylat und/oder Polymethacrylat und/oder Polyurethan und/oder Polyester und/oder Polysiloxan und
(B) mindestens eine Verbindung (B) mit blockierten Isocyanatgruppen und mit Alkoxysilangruppen,
dadurch gekennzeichnet, dass
(i) die Hydroxylgruppen der Komponente (A) mit mindestens einem acyclischen Orthoester blockiert sind,
(ii) die Verbindung (B) mindestens eine Struktureinheit (II) der Formel (II) aufweist

   -N(X-SiR"ₓ(OR)₃₋ₓ)ₙ(X'-SiR"_{y}(OR)_{3-y})ₘ (II),

   wobei
   R = Wasserstoff, Cycloalkylrest oder Alkylrest, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
   X,X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
   R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen, n = 0 bis 2, m = 0 bis 2, m+n = 2, sowie x, y = 0 bis 2 ist,
   und
(iii) mindestens 90 Mol-% der insgesamt in der Komponente (B) vorhandenen Alkoxysilangruppen Ethoxysilangruppen SiOC₂H₅ sind.

Gegenstand der vorliegenden Erfindung sind außerdem mehrstufige Beschichtungsverfahren unter Verwendung dieser Beschichtungsmittel sowie die Verwendung der Beschichtungsmittel als Klarlack bzw. Anwendung des Beschichtungsverfahrens für die Automobilserienlackierung und die Lackierung von Automobii-Anbauteiten.

Im Hinblick auf den Stand der Technik war es überraschend und für den Fachmann nicht vorhersehbar, dass die Aufgaben, die der vorliegenden Erfindung zugrunde lagen, mit Hilfe der erfindungsgemäßen Beschichtungsmittel gelöst werden konnten.

So ist es insbesondere überraschend, dass die erfindungsgemäßen Beschichtungsmittel eine sehr gute Lagerstabilität bei gleichzeitig sehr guter Aushärtung zeigen. Die Viskosität der Beschichtungsmittel steigt nämlich bei Lagerung bei Temperaturen von 40°C innerhalb von 28 Tagen nicht mehr als um 50% an. Gleichzeitig zeigen die Beschichtungsmittel aber auch eine sehr gute Aushärtung unter den im Bereich der Automobillackierung üblichen Härtebedingungen, insbesondere bei Temperaturen von 100 bis 200°C während einer Zeit von 10 min bis zu 1 Stunde.

Vorteilhaft ist ferner, dass die erfindungsgemäßen Beschichtungsmittel zu Beschichtungen führen, die hochgradig kratzfest sind und insbesondere einen hohen Glanzerhalt nach Kratzbelastung aufweisen.

Gleichzeitig liefern die erfindungsgemäßen Beschichtungsmittel neue Beschichtungen und Lackierungen, speziell Klarlackierungen, die sich auch in Schichtdicken größer 40 µm herstellen lassen, ohne dass Spannungsrisse auftreten. Deswegen können die erfindungsgemäßen Beschichtungen und Lackierungen, insbesondere die Klarlackierungen, in dem technologisch und ästhetisch besonders anspruchsvollen Gebiet der Automobilserienlackierung (OEM) eingesetzt werden. Die Beschichtungen weisen auch eine gute Säurebeständigkeit und eine geringe Vergilbung beim Einbrennen auf.

Schließlich können die erfindungsgemäßen Beschichtungsmittel besonders einfach und sehr gut reproduzierbar hergestellt werden und bereiten bei der Lackapplikation keine signifikanten toxikologischen und ökologischen Probleme.

### Beschreibung der Erfindung

### Die erfindungsgemäßen Beschichtungsmittel

### Die hydroxylgruppenhaltigen Verbindungen (A)

Es ist erfindungswesentlich, dass die Beschichtungsmittel als Komponente (A) mindestens ein hydroxylgruppenhaltiges Polyacrylat und/oder mindestens ein hydroxylgruppenhaltiges Polymethacrylat und/oder mindestens ein hydroxylgruppenhaltiges Polyurethan und/oder mindestens ein hydroxylgruppenhaltiges Polysiloxan und/oder mindestens einen hydroxylgruppenhaltigen Polyester enthalten.

Die bevorzugten oligomeren und/oder polymeren Polyole (A) weisen massenmittlere Molekulargewichte Mw > 500 Dalton, gemessen mittels GPC (Gelpermeationschromatographie), bevorzugt zwischen 800 und 100.000 Dalton, insbesondere zwischen 1.000 und 50.000 Dalton auf. Die Polyole weisen bevorzugt eine OH-Zahl von 30 bis 300 mg KOH/g, insbesondere zwischen 100 und 200 mg KOH/g, auf.

Die Glasübergangstemperaturen der Polyole liegen bevorzugt zwischen -150 und 100 °C, besonders bevorzugt zwischen -120°C und weniger als 10°C. Die Glasübergangstemperatur wird mit Hilfe von DSC-Messungen nach DIN-EN-ISO 11357-2 bestimmt.

Besonders bevorzugt werden als Komponente (A) Polyole eingesetzt, die primäre Hydroxylgruppen aufweisen, da sich diese Polyole besonders vorteilhaft und vollständig mit den Orthoestern blockieren lassen.

Geeignete Polyesterpolyole sind beispielsweise in EP-A-0 994 117, EP-A-1 273 640 und DE 102007026722 beschrieben. Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 beschrieben. Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Die erfindungsgemäß ganz besonders bevorzugten Polyacrylatpolyole und/oder Polymethacrylatpolyole sowie deren Mischpolymerisate, im folgenden Polyacrylatpolyole genannt, sind in der Regel Copolymerisate und weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard.

Die Glasübergangstemperatur der Copolymerisate liegt in der Regel zwischen -100 und 100 °C, insbesondere zwischen -50 und weniger als 10°C.

Die Glasübergangstemperatur wird mit Hilfe von DSC-Messungen nach DIN-EN-ISO 11357-2 bestimmt.

Die Polyacrylatpolyole weisen bevorzugt eine OH-Zahl von 60 bis 250 mg KOH/g, insbesondere zwischen 70 und 200 KOH/g auf. Die OH-Zahl gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2).

Auch durch die Auswahl der hydroxylgruppenhaltigen Bindemittel können die Eigenschaften der endgehärteten Beschichtung beeinflusst werden. Im Allgemeinen kann nämlich mit steigender OH-Zahl der Komponente (A) der Silanisierungsgrad, d.h. die Menge Struktureinheiten der Formel (II) und ggf. (III), erniedrigt werden, was wiederum einen positiven Einfluss auf die Witterungsbeständigkeit der endgehärteten Beschichtung zur Folge hat.

Die Polyacrylatpolyole weisen bevorzugt eine Säurezahl zwischen 0 und 30 mg KOH/g auf.

Die Säurezahl gibt hierbei die Anzahl der mg Kaliumhydroxid an, die zur Neutralisation von 1 g der jeweiligen Verbindung der Komponente (A) verbraucht wird (DIN EN ISO 2114).

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2- Hydroxypropylacrylat, 2- Hydroxypropylmethacrylat, 3-Hydroxypropylacrylat, 3-Hydroxypropylmethacrylat, 3-Hydroxybutylacrylat, 3-Hydroxybutylmethacrylat sowie 4-Hydroxybutylacrylat und/oder 4-Hydroxybutylmethacrylat, eingesetzt. Besonders bevorzugt werden als hydroxylgruppenhaltige Monomerbausteine Hydroxyalkylacrylate und/oder Hydroxyalkylmethacrylate mit primären Hydroxylgruppen eingesetzt, insbesondere 4-Hydroxybutylacrylat und/oder 4-Hydroxybutylmethacrylat.

Als weitere Monomerbausteine werden für die Polyacrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Polyacrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

Es ist erfindungswesentlich, dass die Hydroxylgruppen der Komponente (A) mit mindestens einem acyclischen Orthoester blockiert sind.

Bevorzugt sind die Hydroxylgruppen der Komponente (A) mit mindestens einem acyclischen Orthoester der Formel (I) blockiert 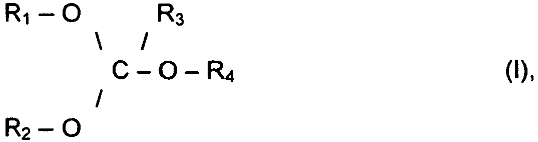 wobei
R₁, R₂, und R₄ gleiche oder verschiedene Reste sind und unabhängig voneinander ein linearer und/oder verzweigter Alkylen- oder Cycloalkylenrest mit 1 bis 8 Kohlenstoffatomen, bevorzugt ein Alkylenrest mit 1 bis 4 Kohlenstoffatomen, und
R₃ Wasserstoff oder ein Alkylenrest mit 1 bis 6 Kohlenstoffatomen ist.

Beispiele für geeignete Orthoester (I) sind die Orthoester der Ameisensäure (R₃ Wasserstoff), wie z.B. Trimethylorthoformiat und Triethylorthoformiat, die Orthoester der Essigsäure (R₃ Methyl), wie z.B. Trimethylorthoacetat und Triethylorthoacetat, die Orthoester der Propionsäure (R₃ Ethyl), wie z.B. Trimethylorthopropionat und Triethylorthopropionat, und die Orthoestern der Buttersäure (R₃ Propyl bzw. iso-Propyl).

Besonders bevorzugt sind die Hydroxylgruppen der Komponente (A) mit einem Orthoester der Essigsäure, insbesondere mit Trimethylorthoacetat und/oder Triethylorthoacetat, und/oder mit einem Orthoester der Ameisensäure, insbesondere Trimethylorthoformiat und Triethylorthoformiat, blockiert. Ganz besonders bevorzugt sind die Hydroxylgruppen der Komponente (A) mit einem Orthoester der Essigsäure, insbesondere mit Trimethylorthoacetat und/oder Triethylorthoacetat, blockiert.

Die Umsetzung der hydroxylgruppenhaltigen Verbindungen (A) mit den Orthoestern, insbesondere den Orthoestern (I), erfolgt üblicherweise in dem Fachmann bekannter Weise in einem organischen Lösemittel bei erhöhten Temperaturen, insbesondere bei Temperaturen zwischen 40 und 100°C, ggf. in Gegenwart geeigneter Katalysatoren, wie dies beispielsweise auch in der WO05/092934, Seite 11, letzter Abschnitt, bis Seite 12, erster Abschnitt, beschrieben ist.

Vorteilhafterweise erfolgt dabei die Umsetzung unter Verwendung eines Überschusses an Orthoestern (I), da so recht einfach eine Gelierung der Produkte verhindert werden kann. Besonders bevorzugt erfolgt dabei die Umsetzung der hydroxylgruppenhaltigen Verbindungen (A) mit den Orthoestern unter Verwendung eines Überschusses von mehr als 100 mol-%, insbesondere eines Überschusses von 150 bis 250 mol-% Orthoester (I), bezogen auf den Gehalt an Hydroxylgruppen der Verbindungen (A).

Die Orthoester (I) fungieren dabei als ein Lösemittel für die Komponente (A) bzw. im Beschichtungsmittel auch für das gesamte erfindungsgemäße Beschichtungsmittel. Erfindungsgemäß bevorzugte Beschichtungsmittel enthalten daher den oder die für die Blockierung der Hydroxylgruppen eingesetzten Orthoester (I) als Lösemittel. Bevorzugt werden zusammen mit dem Orthoester noch weitere organische aprotische Lösemittel eingesetzt.

Außerdem werden bevorzugt hydroxylgruppenhaltige Verbindungen (A) eingesetzt, die primäre Hydroxylgruppen aufweisen. Besonders bevorzugt sind mehr als 60 mol-%, insbesondere mehr als 80 mol-% und besonders bevorzugt mehr als 90 mol-% und ganz besonders bevorzugt im Wesentlichen alle Hydroxylgruppen der Verbindungen (A) primäre Hydroxylgruppen, da so eine möglichst gute Lagerstabilität bei gleichzeitig guter Aushärtung der Beschichtungsmittel gewährleistet ist.

### Die Verbindungen (B) mit blockierten Isocyanatgruppen und Alkoxysilangruppen

Als Komponente (B) enthalten die erfindungsgemäßen Beschichtungsmittel eine oder mehrere Verbindungen mit blockierten Isocyanatgruppen und mit Alkoxysilangruppen.

Die als Grundkörper für die erfindungsgemäß bevorzugt eingesetzten isocyanatgruppenhaltigen Verbindungen (B) dienenden Di- und/oder Polyisocyanate sind bevorzugt an sich bekannte substituierte oder unsubstituierte aromatische, aliphatische, cycloaliphatische und/oder heterocyclische Polyisocyanate. Beispiele für bevorzugte Polyisocyanate sind: 2,4-Toluoldiisocyanat, 2,6-Toluoldiiocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexane-1,6-diisocyanat, Isophorondüsocyanat, Ethylendiisocyanat, 1,12-Dodecandiiocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydropheriylen-1,4-diisocyanat, Perhydrodiphenylmethan-2,4'-diisocyanat, 4,4'-Methylendicyclohexyldiisocyanat (z.B. Desmodur ® W der Fa. Bayer AG), Tetramethylxylyldiiocyanate (z.B. TMXDI ® der Fa. American Cyanamid) und Mischungen der vorgenannten Polyisocyanate. Weiterhin bevorzugte Polyisocyanate sind die Biuret-Dimere und die Isocyanurat-Trimere der vorgenannten Diisocyanate.

Besonders bevorzugte Polyisocyanate PI sind Hexamethylen-1,6-diisocyanat, Isophorondiisocyanat und 4,4'-Methylendicyclohexyldiisocyanat, deren Biuret-Dimere und/oder Isocyanurat-Trimere, und/oder das Allophanat-Dimer von Hexamethylen-1,6-diisocyanat. In einer weiteren Ausführungsform der Erfindung sind die Polyisocyanate Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4, 598,131 beschrieben.

Es ist erfindungswesentlich, dass die Verbindung (B) mindestens eine Struktureinheit (II) der Formel (II) aufweist

-N(X-SiR"ₓ(OR)₃₋ₓ)ₙ(X'-SiR"_{y}(OR)_{3-y})ₘ (II),

wobei
R = Wasserstoff, Cycloalkylrest oder Alkylrest, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R = ein Ethylrest oder eine Mischung aus einem Ethylrest plus einem Methylrest,
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2,
m = 0 bis 2,
m+n = 2 , sowie
x, y = 0 bis 2, bevorzugt 0 bis 1, besonders bevorzugt x und y = 0 ist,
und
wobei mindestens 90 Mol-% der insgesamt in der Komponente (B) vorhandenen Alkoxysilangruppen Ethoxysilangruppen SiOC₂H₅ sind.

Sofern die Komponente (B) nur Alkoxysilangruppen in Form der Struktureinheiten (II) aufweist, müssen also mindestens 90 Mol-% der SiOR-Gruppen in der Formel (II) Ethoxysilangruppen SiOC₂H₅ sein. Es ist aber auch möglich, dass die Komponente (B) zusätzlich zu den Struktureinheiten (II) noch weitere Alkoxysilangruppen aufweist. In diesem Fall müssen mindestens 90 Mol-% der insgesamt in der Komponente (B) vorhandenen Alkoxysilangruppen Ethoxysilangruppen SiOC₂H₅ sein.

Bevorzugt sind außerdem Beschichtungsmittel, bei denen die Verbindung (B) mindestens eine Struktureinheit (II') der Formel (II') aufweist

-N(X-SiR"ₓ(OR)₃₋ₓ)ₙ(X'-SiR"_{y}(OR')_{3-y})ₘ (II'),

wobei
R = ein Ethylrest und R' = ein Methylrest ist und R", X und X', n, m, x, und y die bei Formel (II) angegebene Bedeutung haben.

Bevorzugte sind außerdem Beschichtungsmittel, bei denen zumindest ein Teil der Verbindung (B) zusätzlich zu den Struktureinheiten (II) noch mindestens eine Struktureinheit (III) der Formel (III) aufweist,

-N Rₛ -(X-SiR"ₓ(OR)₃₋ₓ) (III),

wobei
Rₛ = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
R, R" und X die bei Formel (II) angegebene Bedeutung haben und
x = 0 bis 2, bevorzugt 0 bis 1, besonders bevorzugt x = 0, ist.

Besonders bevorzugt sind Beschichtungsmittel, bei denen die isocyanatgruppenhaltige Verbindung (B) 5 Mol-% bis 95 Mol-%, bevorzugt mehr als 10 Mol-% bis 90 Mol-%, besonders bevorzugt 20 bis 80 Mol-%, ganz besonders bevorzugt 30 bis 70 Mol-%, mindestens einer Struktureinheit (II) der Formel (II) und 5 Mol-% bis 95 Mol-%, bevorzugt 10 bis weniger als 90 Mol-%, besonders bevorzugt 20 bis 80 Mol-%, ganz besonders bevorzugt 30 bis 70 Mol-%, mindestens einer Struktureinheit (III) der Formel (III) aufweist, jeweils bezogen auf die Gesamtheit der Struktureinheiten (II) und (III).

Hier ist dabei zu beachten, dass - natürlich unter Berücksichtigung vom Mischungsverhältnis der Struktureinheiten (II) und (III) - die Struktur der SiOR Gruppen der Struktureinheiten (II) und (III) so zu wählen ist, dass mindestens 90 Mol-% der insgesamt in der Komponente (B) vorhandenen Alkoxysilangruppen Ethoxysilangruppen SiOC₂H₅ sind. Sind beispielsweise alle Alkoxysilangruppen SiOR der Struktureinheit (II) Ethoxysilangruppen und beträgt der Anteil an Alkoxysilangruppen SiOR der Struktureinheiten (III) nur 10 Mol-%, bezogen auf die Summe der Struktureinheiten (II) plus (III), so können auch ausschließlich Methoxysilangruppen In der Struktureinheit (III) eingesetzt werden.

Die jeweiligen Alkoxysilangruppen SiOR in den Struktureinheiten (II) und (III) können gleich oder verschieden sein, entscheidend für den Aufbau der Reste ist jedoch, inwiefern diese die Reaktivität der hydrolysierbaren Silangruppen beeinflussen. Nur durch die Verwendung des hohen Anteils von Ethoxysilangruppen von mindestens 90 Mol-% ist nämlich überraschenderweise gewährleistet, dass einerseits die Lagerstabilität der Beschichtungsmittel sehr gut ist und dass andererseits aber auch eine sehr gute Aushärtung der Beschichtungsmittel gewährleistet ist.

Bevorzugte Beschichtungsmittel werden erhalten, wenn mindestens 95 Mol-%, der insgesamt in der Komponente (B) vorhandenen Alkoxysilangruppen Ethoxysilangruppen SiOC₂H₅ sind. Besonders bevorzugt sind alle in der Komponente (B) vorhandenen Alkoxysilangruppen Ethoxysilangruppen SiOC₂H₅.

Dabei hat die Struktur der Silanreste einen Einfluss auf deren Reaktivität. Hinsichtlich der Verträglichkeit und der Reaktivität der Silane werden Silane mit 3 hydrolysierbaren Gruppen bevorzugt eingesetzt, d.h. in den Struktureinheiten (II) und (III) ist jeweils x und y = 0.

Die Struktureinheit (II) der Formel (II) und ggf. die Struktureinheit (III) der Formel (III) werden bevorzugt dadurch in die Komponente (B) eingeführt, dass ein Teil der Isocyanatgruppen der obengenannten Diisocyanate und/oder Polyisocyanate mit mindestens einer Verbindung der Formel (IIa)

HN(X-SiR"x(OR)3-x)n(X'-SiR"y(OR)3-y)m (IIa),

und ggf. mit mindestens einer Verbindung der Formel (IIIa)

H-N Rₛ -(X-SiR"ₓ(OR)₃₋ₓ) (IIIa),

umgesetzt worden sind, wobei die Substituenten die obengenannte Bedeutung haben.

Die restlichen Isocyanatgruppen der obengenannten Diisocyanate und/- oder Polyisocyanate werden mit mindestens einem Blockierungsmittel umgesetzt. Zur Blockierung kann im Prinzip jedes für die Blockierung von Polyisocyanaten einsetzbare Blockierungsmittel mit einer ausreichend tiefen Deblockierungstemperatur eingesetzt werden.

Bevorzugt werden die Isocyanatgruppen der Komponente (B) mit einem Pyrazol blockiert. Geeignet sind insbesondere Pyrazole der Formel (IV) 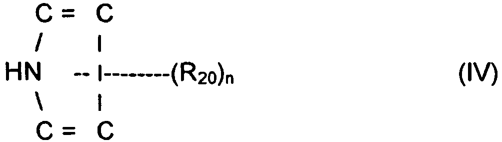 wobei R₂₀ einen Alkylrest, Arylrest, Aralkylrest, einen N-substituierten Carbamylrest, einen Phenylrest, einen Esterrest oder Halogenrest darstellen kann und n eine ganze Zahl ist und n = 0, 1, 2 oder 3 ist. Bei mehr als einem Rest R₂₀ können die Reste gleich oder verschieden sein. Geeignete Pyrazole sind auch in der EP-A-159 117, Seiten 3 bis 4 beschrieben.

Besonders bevorzugt werden die Isocyanatgruppen der Komponente (B) mit substituierten Pyrazolen blockiert. Insbesondere kommen hier Alkylsubstituierte Pyrazole in Betracht. Insbesondere werden als Blockierungsmittel Pyrazole der Formel (IV) eingesetzt, bei denen R₂₀ ein Alkylrest, insbesondere mit 1 bis 4 C-Atomen, ist und bei denen n = 1, 2 oder 3 ist. Beispielsweise können als Blockierungsmittel 3-Methylpyrazol, 3,5-Dimethylpyrazol, 4-Nitro-3,5-dimethypyrazol, 4-Bromo-3,5-dimethylpyrazol u. Ä. eingesetzt werden. Ganz besonders bevorzugt werden die Isocyanatgruppen der Komponente (B) mit 3,5-Dimethylpyrazol, blockiert.

Die Umsetzung der Diisocyanate und/oder Polyisocyanate mit den Blockierungsmitteln kann dabei insbesondere vor oder nach der Umsetzung mit der Verbindung der Formel (IIa) und ggf. der Verbindung der Formel (IIIa) erfolgen, wobei aber generell auch eine gleichzeitige Umsetzung mit den Blockierungsmitteln und den Silanen (IIa) und ggf. (IIIa) möglich ist. Besonders bevorzugt wird aber zunächst ein Teil der Isocyanatgruppen der Diisocyanate und/oder Polyisocyanate mit den Blockierungsmitteln umgesetzt und anschließend werden die restlichen freien Isocyanatgruppen mit der Verbindung der Formel (IIa) und ggf. der Verbindung der Formel (IIIa) umgesetzt.

Die Umsetzung der Di- bzw. Polyisocyanate mit den Blockierungsmitteln. erfolgt bevorzugt in einem Lösemittel, insbesondere einem aprotischen Lösemittel. Die Temperaturen liegen dabei im Allgemeinen zwischen 20 und 100°C.

Die Umsetzung der Diisocyanate und/oder Polyisocyanate mit den Verbindungen (IIa) und (IIIa) erfolgt vorzugsweise in Inertgasatmosphäre bei Temperaturen von maximal 100 °C, bevorzugt von maximal 60 °C in einem Lösemittel bzw. Lösemittelgemisch. Das Lösemittel bzw. Lösemittelgemisch kann aus aromatischen Kohlenwasserstoffen wie 1,2,4-Trimethylbenzol, Mesitylen, Xylol, Propylbenzol und Isopropylbenzol bestehen. Ein Beispiel für ein geeignetes Lösemittelgemisch aus aromatischen Kohlenwasserstoffen ist Solventnaphtha. Das Lösemittel, in dem die Polyisocyanathärter hergestellt werden, kann auch aus aliphatischen Kohlenwasserstoffen, Ketonen, wie Aceton, Methylethylketon oder Methylamylketon, Estern, wie Ethylacetat, Butylacetat, Pentylacetat oder Ethylethoxypropionat, Ether oder Mischungen aus den vorgenannten Lösemitteln bestehen, wobei Lösemittelgemische mit einem hohen Anteil an Butylacetat, insbesondere mindestens 60 Gew.-% Butylacetat, bezogen auf das Gesamtgewicht des Lösemittelgemisches, bevorzugt sind. Besonders bevorzugt enthält das Lösemittelgemisch mindestens 80 Gew.-% Butylacetat.

Besonders bevorzugt sind erfindungsgemäß Beschichtungsmittel, die einen berechneten Silicium Gehalt von 2,0 Massen-% bis 7,0 Massen-% Si, bevorzugt einen berechneten Silicium Gehalt von 3,0 Massen-% bis 6,0 Massen-% Si, jeweils bezogen auf den Feststoffgehalt des Beschichtungsmittels, aufweisen.

### Die Kombination der Komponenten (A) und (B) sowie weitere Komponenten des Beschichtungsmittels

Die Gewichtsanteile des Polyols (A) und des Polyisocyanates (B) werden vorzugsweise solchermaßen gewählt, dass das molare Äquivalentverhältnis der blockierten Isocyanatgruppen der isocyanathaltigen Verbindungen (B) zu den Hydroxylgruppen der hydroxylgruppenhaltigen Verbindungen (A) zwischen 0,9:1 und 1:1,1, bevorzugt zwischen 0,95:1 und 1,05:1, besonders bevorzugt zwischen 0,98:1 und 1,02: 1, liegt.

Bevorzugt werden erfindungsgemäß Beschichtungsmittel eingesetzt, die von 20 bis 80 Gew.-%, bevorzugt von 30 bis 70 Gew.-%, jeweils bezogen auf den Feststoffgehalt des Beschichtungsmittel, mindestens eines hydroxylgruppenhaltiges Polyacrylat und/oder Polymethacrylat und/oder Polyurethans und/oder Polyesters und/oder Polysiloxans, bevorzugt mindestens eines hydroxylgruppenhaltigen Polyacrylates (A) und/oder mindestens eines hydroxylgruppenhaltigen Polymethacrylates (A), enthalten.

Bevorzugt werden erfindungsgemäß Beschichtungsmittel eingesetzt, die von 20 bis 80 Gew.-%, bevorzugt von 30 bis 70 Gew.-%, jeweils bezogen auf den Feststoffgehalt des Beschichtungsmittels, mindestens einer isocyanatgruppenhaltigen Verbindung (B) enthalten.

### Katalysator (D)

Die erfindungsgemäßen Beschichtungsmittel enthalten üblicherweise mindestens einen Katalysator (D) auf Säurebasis. Als Katalysatoren (D) für die Deblockierung der Hydroxylgruppen und für die Vernetzung der Alkoxysilangruppen sowie für die Reaktion zwischen den Hydroxylgruppen der Verbindung (A) und den freien Isocyanatgruppen der Verbindung (B) können an sich bekannte Verbindungen eingesetzt werden.

Insbesondere enthalten die erfindungsgemäßen Beschichtungsmittel mindestens einen Säurekatalysator auf Basis von organischen Säuren und deren Derivaten sowie auf Basis anorganischer Säuren und deren Derivaten. Bei der Auswahl der Säurekatalysatoren ist darauf zu achten, dass die Lagerstabilität der Beschichtungsmittel gewährleistet ist, d.h. die Reaktivität der Katalysatoren bei Umgebungstemperatur darf nicht zu hoch sein.
Bevorzugt werden dabei Katalysatoren auf Basis von Sulphonsäuren und deren Derivaten eingesetzt. Bevorzugt eingesetzt werden daher beispielsweise Methansulphonsäure, Ethansulphonsäure, p-Toluolsulphonsäure, Dodecylbenzylsulphonsäure, Dinonylnaphthylsulphonsäure sowie die entsprechenden Ester der Sulphonsäuren und die entsprechenden Aminaddukte der genannten Sulphonsäuren. Besonders bevorzugt werden Säurekatalysatoren auf Basis von p-Toluolsulphonsäure eingesetzt.

Der Katalysator (D) wird üblicherweise in Anteilen von 0,01 bis 20 Gew.-%, besonders bevorzugt in Anteilen von 0,1 bis 10 Gew.-%, bezogen auf die nicht flüchtigen Bestandteile des erfindungsgemäßen Beschichtungsmittels, eingesetzt. Eine geringere Wirksamkeit des Katalysators kann dabei durch entsprechend höhere Einsatzmengen teilweise kompensiert werden.

Bevorzugt enthalten die erfindungsgemäßen Beschichtungsmittel noch mindestens eine metallorganische Verbindung. Beispielhaft seien hier in der PUR Technologie übliche Katalysatoren aus der Gruppe der Sn(II)-, Sn(IV)-, Zn(II) und Bi-Verbindungen genannt. Bevorzugt werden als metallorganische Verbindung Dibutylzinndilaurat, Dibutylzinnoxid, Dioctylzinnoxid, Wismutlactat, Wismutoxid und insbesondere Dibutylzinndilaurat eingesetzt.

Die metallorganische Verbindung wird üblicherweise in Anteilen von 0,01 bis 10 Gew.-%, besonders bevorzugt in Anteilen von 0,1 bis 5 Gew.-%, bezogen auf die nicht flüchtigen Bestandteile des erfindungsgemäßen Beschichtungsmittels, eingesetzt.

Neben den Verbindungen (A) und (B) können ggf. noch weitere Bindemittel (E) eingesetzt werden, welche vorzugsweise mit den Hydroxylgruppen des Poly(meth)acrylates (A) und/oder mit den Isocyanatgruppen der Verbindung (B) und/oder mit den Alkoxysilylgruppen der Verbindungen (B) reagieren und Netzwerkpunkte ausbilden können.

Beispielsweise sind als Komponente (E) Aminoplastharze und/oder Epoxydharze verwendbar. Es kommen die üblichen und bekannten Aminoplastharze in Betracht, deren Methylol- und/oder Methoxymethylgruppen teilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

In der Regel werden solche Komponenten (E) in Anteilen von bis zu 40 Gew.-%, bevorzugt von bis zu 30 Gew.-%, besonders bevorzugt von bis zu 25 Gew.-%, bezogen auf die nichtflüchtigen Bestandteile des Beschichtungsmittels, eingesetzt.

Als Lösemittel für die erfindungsgemäßen Beschichtungsmittel sind insbesondere solche geeignet, die im Beschichtungsmittel chemisch inert gegenüber den Verbindungen (A), (B) und ggf. (E) sind und die auch bei der Härtung des Beschichtungsmittels nicht mit (A), (B) und ggf. (E) reagieren. Beispiele für solche Lösemittel sind aliphatische und/oder aromatische Kohlenwasserstoffe wie Toluol, Xylol, Solventnaphtha, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel, auf.

Darüber hinaus kann die erfindungsgemäße Bindemittelmischung bzw. das erfindungsgemäße Beschichtungsmittel mindestens ein übliches und bekanntes Lackadditiv (F) in wirksamen Mengen, d.h. in Mengen vorzugsweise bis zu 30 Gew.-%, besonders bevorzugt bis zu 25 Gew.-% und insbesondere bis zu 20 Gew.-%, jeweils bezogen auf die nichtflüchtigen Bestandteile des Beschichtungsmittels, enthalten.

Beispiele geeigneter Lackadditive (F) sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- Reaktiwerdünner, wie sie aus dem Stand der Technik allgemein bekannt sind, welche bevorzugt inert gegenüber den -Si(OR)3-Gruppen sind,
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile®; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate;
- Flammschutzmittel und /oder
- Wasserfänger.

In einer weiteren Ausführungsform der Erfindung kann das erfindungsgemäße Beschichtungsmittel noch weitere Pigmente und/oder Füllstoffe enthalten und zur Herstellung pigmentierter Topcoats dienen. Die dafür eingesetzten Pigmente und/oder Füllstoffe sind dem Fachmann bekannt.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die modulare Kratzfestausrüstung von bereits lackierten Automobilkarosserien.

Die erfindungsgemäßen Beschichtungsmittel zeichnen sich durch eine sehr gute Lagerstabilität bei gleichzeitig sehr guter Aushärtung unter den im Bereich der Automobillackierung üblichen Härtebedingungen, insbesondere bei Temperaturen von 100 bis 200°C während einer Zeit von 10 min bis zu 1 Stunde, aus.

Die Applikation der erfindungsgemäßen Beschichtungsmittel kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 100 bis 200°C, besonders bevorzugt 120 bis 180°C, während einer Zeit von 10 min bis zu 1 h, wobei bei den für die Lackierung von Kunststoffteilen angewandten niedrigeren Temperaturen auch längere Härtezeiten zur Anwendung kommen können.

Die erfindungsgemäßen Beschichtungsmittel liefern neue gehärtete Beschichtungen, insbesondere Lackierungen, speziell Klarlackierungen, Formteile, speziell optische Formteile, und freitragende Folien, die hoch kratzfest sind und insbesondere einen hohen Glanzerhalt nach Kratzbelastung aufweisen. Außerdem weisen die erfindungsgemäß erhaltenen Beschichtungen auch eine gute Säurebeständigkeit und eine geringe Vergilbung beim Einbrennen auf. Schließlich lassen sich die erfindungsgemäßen Beschichtungen und Lackierungen, speziell die Klarlackierungen, auch in Schichtdicken > 40 µm herstellen, ohne dass Spannungsrisse auftreten.

Die erfindungsgemäßen Beschichtungsmittel eignen sich daher hervorragend als dekorative, schützende und/oder effektgebende, hoch kratzfeste Beschichtungen und Lackierungen von Karosserien von Fortbewegungsmitteln (insbesondere Kraftfahrzeuge, wie Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Insbesondere werden die erfindungsgemäßen Beschichtungsmittel und Lackierungen, insbesondere die Klarlackierungen, in dem technologisch und ästhetisch besonders anspruchsvollen Gebiet der Automobilserienlackierung (OEM) und zur Beschichtung von Kunststoff-Anbauteilen für Pkw-Karosserien, insbesondere für Karosserien von Pkw der Oberklasse, wie z. B. für die Herstellung von Dächern, Heckklappen, Motorhauben, Kotflügeln, Stoßstangen, Spoilern, Schwellern, Schutzleisten, seitlichen Verkleidungen u. Ä. eingesetzt.

Die Kunststoffteile bestehen üblicherweise aus ASA, Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%, verwendet.

Unter ASA werden dabei im Allgemeinen schlagzähmodifizierte Styrol/-Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Besonders bevorzugt werden die erfindungsgemäßen Beschichtungsmittel in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit den erfindungsgemäßen Beschichtungsmittel aufgetragen werden. Gegenstand der Erfindung sind daher auch effekt- und/oder farbgebende Mehrschichtlackierungen aus mindestens einer pigmentierten Basislackschicht und mindestens einer darauf angeordneten Klarlackschicht, die dadurch gekennzeichnet sind, dass die Klarlackschicht aus dem erfindungsgemäßen Beschichtungsmittel hergestellt worden ist.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird das erfindungsgemäße Beschichtungsmittel aufgebracht. Anschließend wird die Zweischichtlackierung bevorzugt unter bei der Automobilserienlackierung angewandten Bedingungen bei Temperaturen von 100 bis 200°C, besonders bevorzugt 120 bis 180°C, während einer Zeit von 10 min bis zu 1 h eingebrannt.

Die mit dem erfindungsgemäßen Beschichtungsmittel erzeugten Schichten zeichnen sich vor allem durch eine besonders hohe Kratzfestigkeit und insbesondere einen hohen Glanzerhalt nach Kratzbelastung aus. Außerdem weisen die erfindungsgemäß erhaltenen Beschichtungen auch eine gute Säurebeständigkeit und eine geringe Vergilbung beim Einbrennen auf. Schließlich lassen sich die erfindungsgemäßen Beschichtungen und Lackierungen, speziell die Klarlackierungen, auch in Schichtdicken > 40 µm herstellen, ohne dass Spannungsrisse auftreten

In einer weiteren bevorzugten Ausführungsform der Erfindung wird das erfindungsgemäße Beschichtungsmittel als transparenter Klarlack zur Beschichtung von Kunststoffsubstraten, insbesondere von Kunststoff-Anbauteilen, eingesetzt. Die Kunststoffanbauteile werden bevorzugt ebenfalls in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (z.B. Beflammen, Corona- oder Plasma-Behandlung des Substrats) zunächst eine pigmentierte Basislackschicht und danach eine Schicht mit den erfindungsgemäßen Beschichtungsmittel aufgetragen werden. Schließlich wird das erfindungsgemäße Beschichtungsmittel als transparenter Klarlack zur Beschichtung von transparenten Kunststoffsubstraten eingesetzt. In diesem Fall beinhalten die Beschichtungsmittel UV-Absorber, die in Menge und Art auch auf den wirksamen UV-Schutz des Kunststoffsubstrats ausgelegt sind. Auch hier zeichnen sich die erhaltenen Beschichtungen durch eine herausragende Kombination von Kratzfestigkeit und insbesondere einen hohen Glanzerhalt nach Kratzbelastung aus. Außerdem weisen die erfindungsgemäß erhaltenen Beschichtungen eine gute Säurebeständigkeit und eine geringe Vergilbung beim Einbrennen auf. Schließlich lassen sich die erfindungsgemäßen Beschichtungen und Lackierungen, speziell die Klarlackierungen, auch in Schichtdicken > 40 µm herstellen, ohne dass Spannungsrisse auftreten. Die solchermaßen beschichteten transparenten Kunststoffsubstrate werden vorzugsweise für den Ersatz von Glaskomponenten im Automobilbau eingesetzt, wobei die Kunststoffsubstrate bevorzugt aus Polymethylmethacrylat oder Polycarbonat bestehen.

### Beispiele

### Herstellung des Poly(meth)acrylatharzes mit unblockierten Hydroxylgruppen A'1

In einem, mittels Ölumlaufthermostat beheizbaren, doppelwandigen 4-I Edelstahlkessel, ausgestattet mit Thermometer, Ankerrührer, 2 Tropftrichtern und Rückflußkühler wird Lösungsmittel zur Polymerisation vorgelegt. In einem der Tropftrichter wird die Monomerenmischung, in dem zweiten Tropftrichter die Intiatorlösung, enthaltend einen geeigneten Initiator (i.d.R. ein Peroxid), vorgelegt. Die Vorlage wird auf eine Polymerisationstemperatur von 140°C aufgeheizt. Nach Erreichen der Polymerisationstemperatur wird zunächst der Initiatorzulauf gestartet. 15 Minuten nach Beginn des Initiatorzulaufes wird der Monomerenzulauf

(Dauer 240 Minuten) gestartet. Der Initiatorzulauf wird so eingestellt, dass er nach Beendigung des Monomerenzulaufs noch weitere 30 Minuten nachläuft. Nach Beendigung des Initiatorzulaufes wird die Mischung für weitere 2h bei 140°C gerührt und anschließend auf Raumtemperatur abgekühlt. Anschließend wird die Reaktionsmischung mit Lösemittel auf den in Tabelle 2 angegebenen Feststoffgehalt eingestellt.

**Tabelle 1: Monomerzusammensetzung des Bindemittels (A'1) in Gewichtsteilen**

| | Beispiel 1 (A'1) |
|---|---|
| Komponente | Gew.-TI. |
| Styrol | 8,0 |
| n-Butylmethacrylat | 8,0 |
| Acrylsäure | 0,6 |
| 4-Hydroxybutylacrylat | 12,0 |
| 2-Hydroxyethylacrylat | 12,0 |
| n-Butylacrylat | 19,0 |

**Tabelle 2: Kennzahlen des Bindemittels (A'1)**

| | Beispiel 1 |
|---|---|
| Bindemittel | (A'1) |
| Festkörper 1h 150°C | 65% |
| Säurez. ¹⁾ [mgKOH/g] | 8-12 |
| OH-Zahl ²⁾ berechnet [mgKOH/g] | 175 |
| Tg (FOX)³⁾ °C | -27 |

| | |
|---|---|
| ¹⁾ experimentell bestimmte Säurezahl ²⁾ berechnete OH-Zahl ausgehend von der Menge an hydroxylgruppenhaltigen Monomeren ³⁾ anhand der Foxgleichung berechnete Glasübergangstemperatur | |

### Herstellung des Poly(meth)acrylatharzes A1 mit blockierten Hydroxylgruppen

In einem Stahlreaktor, ausgestattet mit einem Rückflußkühler und einem Thermometer, werden 55 Teile des hydroxylgruppenhaltigen Polyacrylates (A'1), 4,6 Teile Solventnaphta und 0,2 Teile Eisessig vorgelegt. Unter Stickstoffüberschleierung und Rühren werden bei Raumtemperatur langsam über einen Tropftrichter 40,2 Teile Trimethylorthoacetat zudosiert. Nach Ende des Zulaufs wird die Reaktionstemperatur auf 50-60°C erhöht und gehalten. Die Reaktion ist nach ca. 7 Stunden abgeschlossen. Es entsteht eine klare Lösung. Das Endprodukt wird mittels IR-Spektroskopie auf eine vollständige Blockierung der OH-Funktionen überprüft. Festkörper des Polyacrylates (A1) mit blockierten Hydroxylgruppen (FK) 1h bei 120°C: ca. 39%

### Herstellung eines Härters (B1) mit einem Silanisierungsgrad der Isocyanatgruppen von c = 40 Mol%, einem Anteil von 100 Mol% Ethoxysilangruppen und vollständiger Blockierung der restlichen Isocyanatgruppen

In einem Stahlreaktor, ausgestattet mit einem Rückflußkühler und einem Thermometer, werden 28,8 Teile trimerisiertes Hexamethylendiisocyanat (HDI) (Basonat HI 100 der Firma BASF SE), 25,1 Teile Butylacetat und 8,7 Teile 3,5-Dimethylpyrazol (DMP) vorgelegt. Unter Stickstoffüberschleierung und Rühren ist ein Temperaturanstieg auf ca. 65°C zu beobachten. Anschließend wird die Reaktionstemperatur für ca. 2 Stunden bei ca. 50-60°C gehalten. Der Soll-Rest-NCO von 4,04% wird nach dieser ersten Blockierungsphase mittels Titration überprüft. Danach erfolgt die Silanisierung der restlichen freien Isocyanatgruppen. Das Reaktionsgemisch wird gekühlt. Es werden zusätzlich 11,8 Teile Butylacetat zugeführt. Über einen Tropftrichter werden anschließend 25,6 Teile Bis-[3-(triethoxysilyl)propyl]amin (Dynasylan 1122, Firma Degussa, Rheinfelden) zugetropft. Dabei ist darauf zu achten, dass die Temperatur von 60°C nicht überschritten wird. Das Reaktionsgemisch wird für 2 Stunden bei 50-60°C gerührt. Es entsteht eine klare Lösung. Mittels Titration wird überprüft, dass kein freies NCO mehr vorhanden ist.
Festkörper (FK) theoretisch: 63%; NCO-Gehalt bez. Lösung, wenn beim Einbrennen des Klarlacks das DMP deblockiert: 3,80%

### Herstellung eines Härters (B2) mit einem Silanisierungsgrad der Isocyanatgruppen von c= 40 Mol%, einem Anteil von 95 Mol% Ethoxysilangruppen und 5 Mol% Methoxysilangruppen sowie vollständiger Blockierung der restlichen Isocyanatgruppen

In einem Stahlreaktor, ausgestattet mit einem Rückflußkühler und einem Thermometer, werden 29,4 Teile trimerisiertes Hexamethylendiisocyanat (HDI) (Basonat HI 100 der Firma BASF SE), 25,6 Teile Butylacetat und 8,9 Teile 3,5-Dimethylpyrazol (DMP) vorgelegt. Unter Stickstoffüberschleierung und Rühren ist ein Temperaturanstieg auf ca. 65°C zu beobachten. Anschließend wird die Reaktionstemperatur für ca. 2 Stunden bei ca. 50-60°C gehalten. Der Soll-Rest-NCO von 4,04% wird nach dieser ersten Blockierungsphase mittels Titration überprüft. Danach erfolgt die Silanisierung der restlichen freien Isocyanatgruppen. Das Reaktionsgemisch wird gekühlt. Über einen Tropftrichter wird anschließend ein Gemisch aus 22,9 Teilen Bis-[3-(triethoxysilyl)propyl]amin (Dynasylan 1122, Firma Degussa, Rheinfelden) und 1,8 Teilen Trimethoxypropylsilylamin (Dynasilan 1189, Evonik) in 11,4 Teilen Butylacetat zugetropft. Dabei ist darauf zu achten, dass die Temperatur von 60°C nicht überschritten wird. Das Reaktionsgemisch wird für 2 Stunden bei 50-60°C gerührt. Es entsteht eine klare Lösung. Mittels Titration wird überprüft, dass kein freies NCO mehr vorhanden ist.
Festkörper (FK) theoretisch: 63%,NCO-Gehalt bez. Lösung, wenn beim Einbrennen des Klarlacks das DMP deblockiert: 3,80%

### Herstellung eines nichterfindungsgemäßen Härters (B3) mit einem Silanisierungsgrad der Isocyanatgruppen von c = 40 Mol%, einem Anteil von 100 Mol-% Methoxysilangruppen sowie vollständiger Blockierung der restlichen Isocyanatgruppen

In einem Stahlreaktor, ausgestattet mit einem Rückflußkühler und einem Thermometer, werden 31,2 Teile trimerisiertes Hexamethylendiisocyanat (HDI) (Basonat HI 100 der Firma BASF SE), 27,3 Teile Butylacetat und 9,4 Teile 3,5-Dimethylpyrazol (DMP) vorgelegt. Unter Stickstoffüberschleierung und Rühren ist ein Temperaturanstieg auf ca. 65°C zu beobachten. Anschließend wird die Reaktionstemperatur für ca. 2 Stunden bei ca. 50-60°C gehalten. Der Soll-Rest-NCO von 4,04% wird nach dieser ersten Blockierungsphase mittels Titration überprüft. Danach erfolgt die Silanisierung der restlichen freien Isocyanatgruppen. Das Reaktionsgemisch wird gekühlt. Über einen Tropftrichter werden anschließend 22,4 Teile Bis-[3-(trimethoxysilyl)propyl]amin (Dynasylan 1124, Firma Degussa, Rheinfelden) in 9,7 Teilen Butylacetat zugetropft. Dabei ist darauf zu achten, dass die Temperatur von 60°C nicht überschritten wird. Das Reaktionsgemisch wird für 2 Stunden bei 50-60°C gerührt. Es entsteht eine klare Lösung. Mittels Titration wird überprüft, dass kein freies NCO mehr vorhanden ist.
Festkörper (FK) theoretisch: 63%, NCO-Gehalt bez. Lösung, wenn beim Einbrennen des Klarlacks das DMP deblockiert: 4,10%

### Herstellung der Beschichtungsmittel der Beispiele 1 bis 2 sowie des Vergleichsbeispiele V1 bis V4 und der Beschichtungen der Beispiele 1 bis 2 sowie der Vergleichsbeispiele V1 bis V4

Aus den in Tabelle 3 angegebenen Komponenten werden die Klarlacke der erfindungsgemäßen Beispiele 1 bis 2 und der Vergleichsbeispiele V1 bis V4 dadurch hergestellt, dass die in Tabelle 3 angegebenen Komponenten vereinigt und solange verrührt werden, bis eine homogene Mischung entsteht.

**Tabelle 3: Zusammensetzung der Beschichtungsmittel der Beispiele 1 bis 2 sowie der Vergleichsbeispiele V1 bis V4**

| | Beispiel 1 | Vgl.-beisp. V1 | Beispiel 2 | Vgl.-beisp. V2 | Vgl.-beisp. V3 | Vgl.-beisp. V4 |
|---|---|---|---|---|---|---|
| blockiertes Polyacrylat (A1) ¹⁾ | 38,1 | | 38,1 | | 38,1 | |
| unblockiertes Polyacrylat (A'1) ²⁾ | | 23,4 | | 23,4 | | 23,4 |
| Dynoadd F1 ³⁾ | 0,2 | 0,2 | 0,2 | 0,2 | 0,2 | 0,2 |
| Tinuvin® 384 ⁴⁾ | 0,6 | 0,6 | 0,6 | 0,6 | 0,6 | 0,6 |
| Tinuvin® 292 ⁵⁾ | 0,6 | 0,6 | 0,6 | 0,6 | 0,6 | 0,6 |
| Butylacetat | | 14,7 | | 14,7 | | 14,7 |
| Aktivator⁶⁾ | 4,0 | 4,0 | 4,0 | 4,0 | 4,0 | 4,0 |
| Dynapol® 1203 ⁷⁾ | 5,4 | 5,4 | 5,4 | 5,4 | 5,4 | 5,4 |
| Härter B1 ⁸⁾ | 51,1 | 51,1 | | | | |
| Härter B2 ⁹⁾ | | | 51,1 | 51,1 | | |
| Härter B3 (Vgl.) ¹⁰⁾ | | | | | 51,1 | 51,1 |
| Summe | 100 | 100 | 100 | 100 | 100 | 100 |

| | | | | | | |
|---|---|---|---|---|---|---|
| Erläuterungen zu Tabelle 3: ¹⁾ oben beschriebenes Polyacrylat A1 mit blockierten Hydroxylgruppen ²⁾ oben beschriebenes Polyacrylat A'1 mit unblockierten Hydroxylgruppen ³⁾ Dynoadd F1 = handelsübliches, mehrfunktionelles, oberflächenaktives Additiv der Firma HertfelderGmbH, Bielefeld ⁴⁾ Tinuvin® 384 = handelsübliches Lichtschutzmittel auf Basis eines Benztriazols der Firma Ciba ⁵⁾ Tinuvin® 292 = handelsübliches Lichtschutzmittel auf Basis eines sterisch gehinderten Amins der Firma Ciba ⁶⁾ Aktivator = 1%ige Dibutylzinndilauratlösung in einem Gemisch aus 80 Teilen Butylacetat und 20 Teilen Xylol ⁷⁾ Dynapol® 1203 = handelsüblicher Katalysator der Firma Evonik ⁸⁾ oben beschriebener Härter B1 mit Silangruppen und blockierten Isocyanatgruppen ⁹⁾ oben beschriebener Härter B2 mit Silangruppen und blockierten Isocyanatgruppen: ¹⁰⁾ oben beschriebener Härter B3 mit Silangruppen und blockierten Isocyanatgruppen | | | | | | |

Von den so erhaltenen Beschichtungsmitteln der Beispiele 1 bis 2 sowie der Vergleichsbeispiele V1 bis V4 wird die Lagerstabilität nach Lagerung, bei 40°C bestimmt, indem zunächst die Ausgangsviskosität und die danach die Viskosität nach Lagerung von 7, 14, 21, 28 und 35 Tagen bei 40°C bestimmt wird, wobei die Viskosität als Auslaufzeit im DN14 Becher bei 23°C bestimmt wird. Die Ergebnisse sind in Tabelle 4 angegeben.

**Tabelle 4: Lagerstabilität der Beschichtungsmittel der Beispiele 1 bis 2 sowie der Vergleichsbeispiele V1 bis V4**

| Viskosität in Sekunden ¹⁾ nach Lagerung bei 40°C nach Tagen | Beispiel 1 | Vgl.-beisp. V1 | Beispiel 2 | Vgl.-beisp. V2 | Vgl.-beisp. V3 | Vgl.-beisp. V4 |
|---|---|---|---|---|---|---|
| Ausgangsviskosität | 21 | 21 | 21 | 21 | 21 | 21 |
| 7 Tagen | 21 | geliert | 21 | geliert | geliert | geliert |
| 14 Tagen | 21 | | 21 | | | |
| 21 Tagen | 21 | | 21 | | | |
| 28 Tagen | 22 | | 22 | | | |
| 35 Tagen | 21 | | 23 | | | |

| | | | | | | |
|---|---|---|---|---|---|---|
| ¹⁾ Viskosität gemessen als Auslaufzeit im DIN4 Becher bei 23 °C | | | | | | |

Die Prüfung der Eigenschaften der Beschichtung erfolgte nach pneumatischer Applikation der Beschichtungsmittel bei 2,5 bar in drei Spritzgängen auf einem handelsüblichen Wasserbasislack schwarz uni der Firma BASF Coatings AG. Der Basislack wurde zuvor auf handelsübliche gebonderte Stahlbleche der Firma Chemetall, die mit einer handelsüblichen, eingebrannten Elektrotauchlackierung der Firma BASF Coatings AG und einem handelsüblichen, eingebrannten Primer der Firma BASF Coatings AG beschichtet wurden, appliziert. Danach wird die jeweils resultierende Beschichtung 5 Minuten bei Raumtemperatur abgelüftet und anschließend bei 140°C 22 Minuten eingebrannt,

Der Glanz der Oberfläche wird mit einem Glanzmessgerät (Typ: Micro Haze Plus) der Firma BYK-Gardner bestimmt. Die Kratzfestigkeit der Oberflächen der resultierenden Beschichtungen wurde mit Hilfe des Crockmeter-Tests (in Anlehnung an EN ISO 105-X12 mit 10 Doppelhüben und 9N Auflagekraft unter Verwendung von 9um Schleifpapier (3M 281 Q wetordryTMproductionTM)), unter anschließender Bestimmung des Restglanzes bei 20° mit einem handelsüblichen Glanzgerät bestimmt. Die Ergebnisse sind in Tabelle 5 angegeben.

**Tabelle 5: Eigenschaften der Beschichtungen der Beispiele 1 bis 2 sowie des Vergleichsbeispiels V3**

| | Beispiel 1 | Beispiel 2 | Vgl.-beisp. V3 |
|---|---|---|---|
| Glanz | 85 | 85 | 85 |
| Restglanz nach Crockmeter in % | 85 | 85 | 85 |

## Patentansprüche

1. Beschichtungsmittel auf Basis aprotischer Lösemittel, enthaltend
(A) mindestens ein hydroxylgruppenhaltiges Polyacrylat und/oder Polymethacrylat und/oder Polyurethan und/oder Polyester und/oder Polysiloxan und
(B) mindestens eine Verbindung (B) mit blockierten Isocyanatgruppen und mit Alkoxysilangruppen,
**dadurch gekennzeichnet, dass**
(i) die Hydroxylgruppen der Komponente (A) mit mindestens einem acyclischen Orthoester blockiert sind,
(ii) die Verbindung (B) mindestens eine Struktureinheit (II) der Formel (II) aufweist
-N(X-SIR"ₓ(OR)₃₋ₓ)ₙ(X'-SiR"_{y}(OR)_{3-y})ₘ (II),
wobei
R = Wasserstoff, Cycloalkylrest oder Alkylrest, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2, sowie x, y = 0 bis 2 ist,
und
(iii) mindestens 90 Mol-% der insgesamt in der Komponente (B) vorhandenen Alkoxysilangruppen Ethoxysilangruppen SiOC₂H₅ sind.

2. Beschichtungsmittel nach Anspruch 1, **dadurch gekennzeichnet, dass** die Hydroxylgruppen der Komponente (A) mit mindestens einem acyclischen Orthoester der Formel (I) blockiert sind 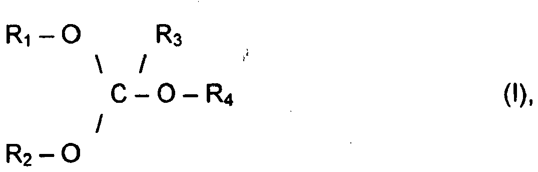 wobei
R₁, R₂, und R₄ gleiche oder verschiedene Reste sind und unabhängig voneinander ein linearer und/oder verzweigter Alkylen- oder Cycloalkylenrest mit 1 bis 8 Kohlenstoffatomen, bevorzugt ein Alkylenrest mit 1 bis 4 Kohlenstoffatomen, und
R₃ Wasserstoff oder ein Alkylenrest mit 1 bis 6 Kohlenstoffatomen ist.

3. Beschichtungsmittel nach Anspruch 1 oder 2, **dadurch gekennzeichnet, dass** zumindest ein Teil der Verbindung (B) zusätzlich mindestens eine Struktureinheit (III) der Formel (III) aufweist,
-N Rₛ -(X-SiR"ₓ(OR)₃₋ₓ) (III),
wobei
Rₛ = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
R, R" und X die bei Formel (II) angegebene Bedeutung haben und
x = 0 bis 2, bevorzugt 0 bis 1 ist

4. Beschichtungsmittel nach einem der Ansprüche 1 bis 3, **dadurch gekennzeichnet, dass** der Rest R entweder ein Ethylrest oder eine Mischung aus einem Methylrest plus einem Ethylrest ist.

5. Beschichtungsmittel nach einem der Ansprüche 1 bis 4, **dadurch gekennzeichnet, dass** mindestens 95 Mol-%, der insgesamt in der Komponente (B) vorhandenen Alkoxysilangruppen Ethoxysilangruppen SiOC₂H₅ sind.

6. Beschichtungsmittel nach einem der Ansprüche 1 bis 5, **dadurch gekennzeichnet, dass** das Beschichtungsmittel einen berechneten Silicium Gehalt von 2,0 Massen-% bis 7,0 Massen-% Si, bevorzugt einen berechneten Silicium Gehalt von 3,0 Massen-% bis 6,0 Massen-% Si, jeweils bezogen auf den Feststoffgehalt des Beschichtungsmittels, aufweist.

7. Beschichtungsmittel nach einem der Ansprüche 1 bis 6, **dadurch gekennzeichnet, dass** die Isocyanatgruppen der Verbindung (B) mit einem Pyrazol, bevorzugt mit 3,5-Dimethylpyrazol, blockiert sind und/oder dass das zur Herstellung der isocyanatgruppenhaltigen Verbindung (B) eingesetzte Di- und/oder Polyisocyanat 1,6-Hexamethylendiisocyanat und/oder deren Isocyanurat-Trimere und/oder deren Allophanat-Dimere ist.

8. Beschichtungsmittel nach einem der Ansprüche 1 bis 7, **dadurch gekennzeichnet, dass** die Hydroxylgruppen der Komponente (A) mit einem Orthoester der Essigsäure, insbesondere mit Trimethylorthoacetat und/oder Triethylorthoacetat, blockiert sind.

9. Beschichtungsmittel nach einem der Ansprüche 1 bis 8, **dadurch gekennzeichnet, dass** die Komponente (A) primäre Hydroxylgruppen aufweist.

10. Beschichtungsmittel nach einem der Ansprüche 1 bis 9, **dadurch gekennzeichnet, dass** das Beschichtungsmittel als Verbindung (A) mindestens ein hydroxylgruppenhaltiges Polyacrylatharz und/oder mindestens ein hydroxylgruppenhaltiges Polymethacrylatharz enthält.

11. Beschichtungsmittel nach einem der Ansprüche 1 bis 10, **dadurch gekennzeichnet, dass** das Beschichtungsmittel mindestens einen Katalysator auf Säurebasis, insbesondere auf Basis von Sulphonsäuren, bevorzugt auf Basis p-Toluolsulphonsäure, enthält und/oder dass das Beschichtungsmittel mindestens eine metallorganische Verbindung enthält.

12. Beschichtungsmittel nach einem der Ansprüche 1 bis 11, **dadurch gekennzeichnet, dass** es dadurch erhältlich ist, dass die hydroxylgruppenhaltigen Verbindungen (A) mit den Orthoestern (I) unter Verwendung eines Überschusses von mehr als 100 mol-%, insbesondere eines Überschusses von 150 bis 250 mol-% Orthoester (I), bezogen auf den Gehalt an Hydroxylgruppen der Verbindungen (A), umgesetzt worden sind.

13. Mehrstufiges Beschichtungsverfahren, **dadurch gekennzeichnet, dass** auf ein gegebenenfalls vorbeschichtetes Substrat eine pigmentierte Basislackschicht und danach eine Schicht aus dem Beschichtungsmittel nach einem der Ansprüche 1 bis 12 aufgebracht wird.

14. Verwendung der Beschichtungsmittel nach einem der Ansprüche 1 bis 12 als Klarlack beziehungsweise Anwendung des Verfahrens nach Anspruch 13 für die Automobilserienlackierung und die Lackierung von Automobil-Anbauteilen.

15. Effekt- und/oder farbgebende mehrschichtige Lackierung aus mindestens einer pigmentierten Basislackschicht und mindestens einer darauf angeordneten Klarlackschicht, **dadurch gekennzeichnet, dass** die Klarlackschicht aus einem Beschichtungsmittel nach einem der Ansprüche 1 bis 12 hergestellt worden ist.

## Claims

1. A coating composition based on aprotic solvents and comprising
(A) at least one hydroxyl-containing polyacrylate and/or polymethacrylate and/or polyurethane and/or polyester and/or polysiloxane and
(B) at least one compound (B) having blocked isocyanate groups and having alkoxysilane groups,
**characterized in that**
(i) the hydroxyl groups of component (A) are blocked with at least one acyclic orthoester,
(ii) the compound (B) has at least one structural unit (II) of the formula (II)
-N(X-SiR"ₓ(OR)₃₋ₓ)ₙ(X'-SIR"_{y}(OR)_{3-y})ₘ (II),
where
R = hydrogen, cycloalkyl radical or alkyl radical, it being possible for the carbon chain to be interrupted by nonadjacent oxygen, sulfur or NRa groups, where Ra = alkyl, cycloalkyl, aryl or aralkyl,
X, X' = linear and/or branched alkylene or cycloalkylene radical having 1 to 20 carbon atoms, preferably X, X' = alkylene radical having 1 to 4 carbon atoms,
R" = alkyl, cycloalkyl, aryl or aralkyl, it being possible for the carbon chain to be interrupted by nonadjacent oxygen, sulfur or NRa groups, where Ra = alkyl, cycloalkyl, aryl or aralkyl, preferably R" = alkyl radical, more particularly having 1 to 6 C atoms,
n = 0 to 2, m = 0 to 2, m+n = 2, and x, y = 0 to 2,
and
(iii) at least 90 mol% of the total alkoxysilane groups present in component (B) are ethoxysilane groups SiOC₂H₅.

2. The coating composition as claimed in claim 1, **characterized in that** the hydroxyl groups of component (A) are blocked with at least one acyclic orthoester of the formula (I) 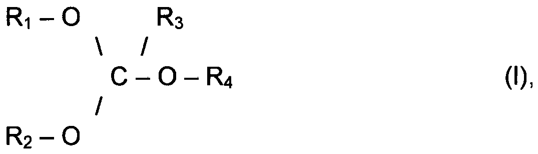 where
R₁, R₂, and R₄ are identical or different radicals and independently of one another are a linear and/or branched alkylene or cycloalkylene radical having 1 to 8 carbon atoms, preferably an alkylene radical having 1 to 4 carbon atoms, and
R₃ is hydrogen or an alkylene radical having 1 to 6 carbon atoms.

3. The coating composition as claimed in claim 1 or 2, **characterized in that** at least a part of the compound (B) additionally has at least one structural unit (III) of the formula (III)
-N Rₛ -(X-SiR"ₓ(OR)₃₋ₓ) (III),
where
Rₛ = hydrogen, alkyl, cycloalkyl, aryl or aralkyl, it being possible for the carbon chain to be interrupted by nonadjacent oxygen, sulfur or NRa groups, where Ra = alkyl, cycloalkyl, aryl or aralkyl,
R, R", and X have the definition stated for formula (II), and
x = 0 to 2, preferably 0 to 1.

4. The coating composition as claimed in any of claims 1 to 3, **characterized in that** the radical R is either an ethyl radical or a mixture of a methyl radical plus an ethyl radical.

5. The coating composition as claimed in any of claims 1 to 4, **characterized in that** at least 95 mol% of the total alkoxysilane groups present in component (B) are ethoxysilane groups SiOC₂H₅.

6. The coating composition as claimed in any of claims 1 to 5, **characterized in that** the coating composition has a calculated silicon content of 2.0% to 7.0% by mass Si, preferably a calculated silicon content of 3.0% to 6.0% by mass Si, based in each case on the solids content of the coating composition.

7. The coating composition as claimed in any of claims 1 to 6, **characterized in that** the isocyanate groups of the compound (B) are blocked with a pyrazole, preferably with 3,5-dimethylpyrazole, and/or **in that** the di- and/or polyisocyanate used to prepare the isocyanato-containing compound (B) is 1,6-hexamethylene diisocyanate and/or isocyanurate trimers thereof and/or allophanate dimers thereof.

8. The coating composition as claimed in any of claims 1 to 7, **characterized in that** the hydroxyl groups of component (A) are blocked with an orthoester of acetic acid, more particularly with trimethyl orthoacetate and/or triethyl orthoacetate.

9. The coating composition as claimed in any of claims 1 to 8, **characterized in that** component (A) has primary hydroxyl groups.

10. The coating composition as claimed in any of claims 1 to 9, **characterized in that** the coating composition comprises as compound (A) at least one hydroxyl-containing polyacrylate resin and/or at least one hydroxyl-containing polymethacrylate resin.

11. The coating composition as claimed in any of claims 1 to 10, **characterized in that** the coating composition comprises at least one acid-based catalyst, more particularly based on sulfonic acids, preferably based on p-toluenesulfonic acid, and/or **in that** the coating composition comprises at least one organometallic compound.

12. The coating composition as claimed in any of claims 1 to 11, **characterized in that** it is obtainable by virtue of the hydroxyl-containing compounds (A) having been reacted with the orthoesters (I) using an excess of more than 100 mol%, more particularly an excess of 150 to 250 mol%, of orthoester (I), based on the amount of hydroxyl groups in the compounds (A).

13. A multistage coating process **characterized in that**, to an optionally precoated substrate, there is applied a pigmented basecoat and thereafter a coat of the coating composition as claimed in any of claims 1 to 12.

14. The use of a coating composition as claimed in any of claims 1 to 12 as clearcoat material or application of the process as claimed in claim 13 for automotive OEM finishing or the finishing of parts for installation in or on automobiles.

15. A multicoat color and/or effect coating system comprising at least one pigmented basecoat and at least one clearcoat disposed thereon, **characterized in that** the clearcoat has been produced from a coating composition as claimed in any of claims 1 to 12.

## Revendications

1. Agent de revêtement à base de solvants aprotiques, contenant :
(A) au moins un polyacrylate et/ou polyméthacrylate et/ou polyuréthane et/ou polyester et/ou polysiloxane contenant des groupes hydroxyle, et
(B) au moins un composé (B) contenant des groupes isocyanate bloqués et des groupes alcoxysilane,
**caractérisé en ce que**
(i) les groupes hydroxyle du composant (A) sont bloqués avec au moins un orthoester acyclique,
(ii) le composé (B) comprend au moins une unité structurale (II) de formule (II)
-N (X-SiR"ₓ(OR)₃₋ₓ)ₙ(X'-SiR"_{y}(OR)_{3-y})ₘ (II),
dans laquelle
R = hydrogène, radical cycloalkyle ou radical alkyle, la chaîne carbonée pouvant être interrompue par des groupes oxygène, soufre ou NRa non voisins, avec Ra = alkyle, cycloalkyle, aryle ou aralkyle,
X, X' = radical alkylène ou cycloalkylène linéaire et/ou ramifié contenant 1 à 20 atomes de carbone, de préférence X, X' = radical alkylène contenant 1 à 4 atomes de carbone,
R" = alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle, de préférence R" = radical alkyle, notamment contenant 1 à 6 atomes C,
n = 0 à 2, m = 0 à 2, m+n = 2, et x, y = 0 à 2,
et
(iii) au moins 90 % en moles des groupes alcoxysilane présents au total dans le composant (B) sont des groupes éthoxysilane SiOC₂H₅.

2. Agent de revêtement selon la revendication 1, **caractérisé en ce que** les groupes hydroxyle du composant (A) sont bloqués avec au moins un orthoester acyclique de formule (I) 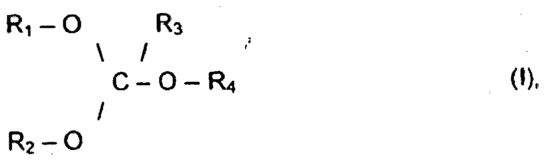 dans laquelle
R₁, R₂ et R₄ sont des radicaux identiques ou différents et représentent indépendamment les uns des autres un radical alkylène ou cycloalkylène linéaire et/ou ramifié contenant 1 à 8 atomes de carbone, de préférence un radical alkylène contenant 1 à 4 atomes de carbone, et
R₃ est l'hydrogène ou un radical alkylène contenant 1 à 6 atomes de carbone.

3. Agent de revêtement selon la revendication 1 ou 2, **caractérisé en ce qu'**au moins une partie du composé (B) comprend également au moins une unité structurale (III) de formule (III)
-N Rₛ-(X-SiR"ₓ(OR)₃₋ₓ) (III),
dans laquelle
Rₛ = hydrogène, alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle,
R, R et X ont la signification indiquée pour la formule (II), et
x = 0 à 2, de préférence 0 à 1.

4. Agent de revêtement selon l'une quelconque des revendications 1 à 3, **caractérisé en ce que** le radical R est un radical éthyle ou un mélange d'un radical méthyle plus un radical éthyle.

5. Agent de revêtement selon l'une quelconque des revendications 1 à 4, **caractérisé en ce qu'**au moins 95 % en moles des groupes alcoxysilane présents au total dans le composant (B) sont des groupes éthoxysilane SiOC₂H₅.

6. Agent de revêtement selon l'une quelconque des revendications 1 à 5, **caractérisé en ce que** l'agent de revêtement présente une teneur en silicium calculée de 2,0 % en masse à 7,0 % en masse de Si, de préférence une teneur en silicium calculée de 3,0 % en masse à 6,0 % en masse de Si, à chaque fois par rapport à la teneur en solides de l'agent de revêtement.

7. Agent de revêtement selon l'une quelconque des revendications 1 à 6, **caractérisé en ce que** les groupes isocyanate du composé (B) sont bloqués avec un pyrazole, de préférence avec le 3,5-diméthylpyrazole, et/ou **en ce que** le di- et/ou polyisocyanate utilisé pour la fabrication du composé (B) contenant des groupes isocyanate est le diisocyanate de 1,6-hexaméthylène et/ou ses trimères d'isocyanurate et/ou ses dimères d'allophanate.

8. Agent de revêtement selon l'une quelconque des revendications 1 à 7, **caractérisé en ce que** les groupes hydroxyle du composant (A) sont bloqués avec un orthoester de l'acide acétique, notamment avec l'orthoacétate de triméthyle et/ou l'orthoacétate de triéthyle.

9. Agent de revêtement selon l'une quelconque des revendications 1 à 8, **caractérisé en ce que** le composant (A) comprend des groupes hydroxyle primaires.

10. Agent de revêtement selon l'une quelconque des revendications 1 à 9, **caractérisé en ce que** l'agent de revêtement contient en tant que composé (A) au moins une résine de polyacrylate contenant des groupes hydroxyle et/ou au moins une résine de polyméthacrylate contenant des groupes hydroxyle.

11. Agent de revêtement selon l'une quelconque des revendications 1 à 10, **caractérisé en ce que** l'agent de revêtement contient au moins un catalyseur à base d'acides, notamment à base d'acides sulfoniques, de préférence à base d'acide p-toluènesulfonique, et/ou **en ce que** l'agent de revêtement contient au moins un composé métallo-organique.

12. Agent de revêtement selon l'une quelconque des revendications 1 à 11, **caractérisé en ce qu'**il peut être obtenu par mise en réaction des composés (A) contenant des groupes hydroxyle avec les orthoesters (I) en utilisant un excès de plus de 100 % en moles, notamment un excès de 150 à 250 % en moles, d'orthoesters (I), par rapport à la teneur en groupes hydroxyle des composés (A).

13. Procédé de revêtement à plusieurs étapes, **caractérisé en ce qu'**une couche de laque de base pigmentée est appliquée sur un substrat éventuellement pré-revêtu, puis une couche de l'agent de revêtement selon l'une quelconque des revendications 1 à 12.

14. Utilisation de l'agent de revêtement selon l'une quelconque des revendications 1 à 12 en tant que laque transparente ou utilisation du procédé selon la revendication 13 pour le laquage automobile de série et le laquage de composants automobiles.

15. Laquage multicouche à effet et/ou colorant constitué par au moins une couche de laque de base pigmentée et au moins une couche de laque transparente agencée sur celle-ci, **caractérisé en ce que** la couche de laque transparente a été fabriquée à partir d'un agent de revêtement selon l'une quelconque des revendications 1 à 12.
